# EUROPEAN PATENT APPLICATION

(11) **EP 4 553 679 A1**
(43) Date of publication of application: **14.05.2025**
(21) Application number: 23834513.6
(22) Date of filing: 12.05.2023
(51) Int. Cl.: G06F 16/9537, G06F 16/9535

(54) **SELF-MOVING DEVICE DEPLOYMENT METHOD AND APPARATUS, ELECTRONIC DEVICE, AND STORAGE MEDIUM**

(30) Priority: 06.07.2022 CN 202210799680
(71) Applicant: Gree Electric Appliances, Inc. of Zhuhai, Zhuhai, Guangdong 519070 (CN); Leayun Technology Co., Ltd. of Zhuhai, Zhuhai, Guandong 519015 (CN)
(72) Inventor: LI, Lihui, Zhuhai, Guangdong 519070 (CN); LI, Shaobin, Zhuhai, Guangdong 519070 (CN); SONG, Dechao, Zhuhai, Guangdong 519070 (CN); JIA, Jutao, Zhuhai, Guangdong 519070 (CN); WU, Wei, Zhuhai, Guangdong 519070 (CN)
(74) Representative: Zacco GmbH
(86) International application number: PCT/CN2023/093989
(87) International publication number: WO 2024/007739

(57) **Abstract**

The present disclosure relates to a method and apparatus for deploying a self-moving device, an electronic device, and a storage medium. The method includes: acquiring position information of a target object in each region; determining an activity trajectory of the target object in each region according to the position information; determining a deployment position of the self-moving device in each region according to the activity trajectory; and controlling the self-moving device to move to the deployment position. Thus, the deployment position of the self-moving device can be determined according to the activity trajectory of the target object, and the self-moving device is controlled to move to the deployment position, without interfering with the daily activities of the target object. The target object does not need to move to the vicinity of the self-moving device, such that the self-moving device moves more intelligently, thereby improving the experience of the object.

## Description

The present disclosure claims priority to Chinese Patent Application No. 202210799680.2, filed to the China National Intellectual Property Administration on July 06, 2022 and entitled "Method and Apparatus for Deploying Self-Moving Device, Electronic Device, and Storage Medium", which is incorporated herein by reference in its entirety.

### Technical Field

Embodiments of the present disclosure relate to the field of computer technologies, and in particular, to a method and apparatus for deploying a self-moving device, an electronic device, and a storage medium.

### Background

A waste container is an essential household product in daily life, and along with the development of the society and the advancement of science and technology, mobile waste containers appear in people's daily life.

At present, the deployment position of the mobile waste container is fixed, and when a user needs to throw away waste, the user also needs to go to the vicinity of the mobile waste container, and thus the deployment of the mobile waste container is unreasonable, leading to poor user experience.

### Summary

In view of this, in order to solve the described technical problem that the deployment position of a mobile waste container is fixed, and when a user needs to throw away waste, the user also needs to go to the vicinity of the mobile waste container, and thus the deployment of the mobile waste container is unreasonable, leading to poor user experience, embodiments of the present disclosure provide a method and apparatus for deploying a self-moving device, an electronic device, and a storage medium.

According to a first aspect, embodiments of the present disclosure provide a method for deploying a self-moving device, the method includes:
position information of a target object in each region is acquired;
an activity trajectory of the target object in each region is determined according to the position information;
a deployment position of the self-moving device in each region is determined according to the activity trajectory; and
the self-moving device is controlled to move to the deployment position.

In some embodiments, the position information of the target object in each region is acquired, includes:
with regard to any region, position information of the target object in the region within each preset time interval is acquired;
the activity trajectory of the target object in each region is determined according to the position information, includes:
   the activity trajectory of the target object in the region within the each preset time interval is determined according to the position information;
   the deployment position of the self-moving device in the each region is determined according to the activity trajectory, includes:
      a deployment position of the self-moving device in the region within the each preset time interval is determined according to the activity trajectory; and
      the self-moving device is controlled to move to the deployment position, includes:
         the self-moving device is controlled to move to the deployment position before the each preset time interval.

In some embodiments, with regard to any region, position information of the target object in the region within each preset time interval is acquired, includes:
with regard to the any region, the position information of the target object in the region within each preset time interval in the each time period within a continuous time period is acquired;
the activity trajectory of the target object in the region within the each preset time interval is determined according to the position information, includes:
   the activity trajectory of the target object in the region within the each preset time interval in the each time period within the continuous time period is determined according to the position information;
   the deployment position of the self-moving device in the region within the each preset time interval is determined according to the activity trajectory, includes:
      all preset time intervals in the each time period within the continuous time period are screened according to the activity trajectories, so as to obtain target time intervals;
      a target activity trajectory of the target object in the region within each target time interval in the each time period within the continuous time period is extracted from the activity trajectories; and
      a deployment position of the self-moving device in the region within the each target time interval is determined according to target activity trajectories; and
      the self-moving device is controlled to move to the deployment position before the each preset time interval, includes:
         the self-moving device is controlled to move to the deployment position before the target time interval.

In some embodiments, an electromagnetic wave device is provided in each region; and with regard to any region, position information of the target object in the region within the each preset time interval in the each time period within the continuous time period is acquired, includes:
with regard to any region, initial position information of the target object in the region collected by the electromagnetic wave device within the each preset time interval in the each time period within the continuous time period is acquired, wherein the initial position information is relative coordinates of the target object in a coordinate system of the electromagnetic wave device; and
the initial position information is transformed into the position information, wherein the position information is absolute coordinates of the target object in a regional coordinate system.

In some embodiments, the all preset time intervals in the each time period within the continuous time period are screened according to the activity trajectories, so as to obtain the target time intervals, includes:
for the each time period within the continuous time period, an activity level of the target object in the region within the each preset time interval in the time period is determined according to the activity trajectory, wherein the activity level is the number of pieces of position information of the target object in the activity trajectory in the region within the each preset time interval in the time period;
the activity level of the target object in the region within the each preset time interval in the time period is compared with a preset activity level threshold; and
in a case that all the activity levels of the target object in the region within the all preset time intervals in the time period are greater than or equal to the activity level threshold, the all preset time intervals are determined as the target time intervals.

In some embodiments, the all preset time intervals in the each time period within the continuous time period are screened according to the activity trajectories, so as to obtain the target time intervals, further includes:
in a case that in the activity levels of the target object in the region within the all preset time intervals in the time period, there are target preset time intervals during which the activity levels of the target object in the region are less than the activity level threshold, the target preset time intervals are deleted from the all preset time intervals, to obtain remaining time intervals of the time period;
whether there are continuous remaining time intervals in all the remaining time intervals in the time period is determined; and
in a case that there is no continuous remaining time interval in all the remaining time intervals in the time period, all the remaining time intervals are determined as the target time intervals.

In some embodiments, the all preset time intervals in the each time period within the continuous time period are screened according to the activity trajectories, so as to obtain the target time intervals, further includes:
in a case that there are the continuous remaining time intervals in all the remaining time intervals in the time period, the continuous remaining time intervals are combined to obtain a combined continuous time interval;
union processing is performed on the continuous time intervals of the each time period within the continuous time period, to obtain a first time interval;
union processing is performed on discontinuous remaining time intervals in all the remaining time intervals of the each time period within the continuous time period, to obtain a second time interval; and
the first time interval and the second time interval are determined as the target time intervals.

In some embodiments, the deployment position of the self-moving device in the region within the each target time interval is determined according to the target activity trajectories, includes:
union processing is performed on the target activity trajectories;
an activity trajectory center of the target activity the subjected to the union processing is determined;
a volume range of the target object in each the target activity trajectory is determined;
a distribution range of obstacles in the region is determined; and
a position in the region which is outside of the volume range of the target object and of the distribution range of the obstacles and which is closest to the activity trajectory center is determined as a deployment position of the self-moving device in the region within the target time interval.

According to a second aspect, embodiments of the present disclosure provide an apparatus for deploying a self-moving device, the apparatus includes:
an information acquisition module, configured to acquire position information of a target object in each region;
a trajectory determination module, configured to determine an activity trajectory of the target object in each region according to the position information;
a position determination module, configured to determine a deployment position of the self-moving device in each region according to the activity trajectory; and
a device control module, configured to control the self-moving device to move to the deployment position.

According to a third aspect, embodiments of the present disclosure provide an electronic device, including: a processor and a memory, wherein the processor is used for executing a program for deploying a self-moving device stored in the memory, so as to implement the method for deploying a self-moving device according to any one of the first aspect.

According to a fourth aspect, embodiments of the present disclosure provide a storage medium, wherein the storage medium stores one or more programs, and the one or more programs may be executed by one or more processors, so as to implement the method for deploying a self-moving device according to any one of the first aspect.

According to the technical solutions provided in the embodiments of the present disclosure, position information of a target object in each region is acquired; an activity trajectory of the target object in each region is determined according to the position information; a deployment position of the self-moving device in each region is determined according to the activity trajectory; and the self-moving device is controlled to move to the deployment position. The position information of the target object in each region can be collected, and then the activity trajectory of the target object is determined, the deployment position of the self-moving device is determined according to the activity trajectory of the target object, and the self-moving device is controlled to move to the deployment position, without interfering with the daily activities of the target object. Compared with fixedly placing a self-moving device at a certain place, the target object does not need to move to the vicinity of the self-moving device, such that the self-moving device moves more intelligently, thereby improving the experience of the object.

### Brief Description of the Drawings

Fig. 1 is a schematic diagram of architecture of a system for deploying a self-moving device shown according to embodiments of the present disclosure;
Fig. 2 is a flowchart of embodiments of a method for deploying a self-moving device provided according to embodiments of the present disclosure;
Fig. 3 is another flowchart of embodiments of a method for deploying a self-moving device provided according to embodiments of the present disclosure;
Fig. 4 is still another flowchart of embodiments of a method for deploying a self-moving device provided according to embodiments of the present disclosure;
Fig. 5 is yet another flowchart of embodiments of a method for deploying a self-moving device provided according to embodiments of the present disclosure;
Fig. 6 is a block diagram of embodiments of an apparatus for deploying a self-moving device provided according to embodiments of the present disclosure; and
Fig. 7 is a schematic structural diagram of an electronic device provided according to embodiments of the present disclosure.

### Detailed Description of the Embodiments

To make the objects, technical solutions and advantages of embodiments of the present disclosure clearer, hereinafter, the technical solutions in embodiments of the present disclosure will be described clearly and thoroughly in combination with the accompanying drawings in the embodiments of the present disclosure. Obviously, the embodiments as described are only some rather than all the embodiments of the present disclosure. All other embodiments obtained by a person of ordinary skill in the art on the basis of the embodiments of the present disclosure without involving any inventive effort shall all fall within the scope of protection of the present disclosure.

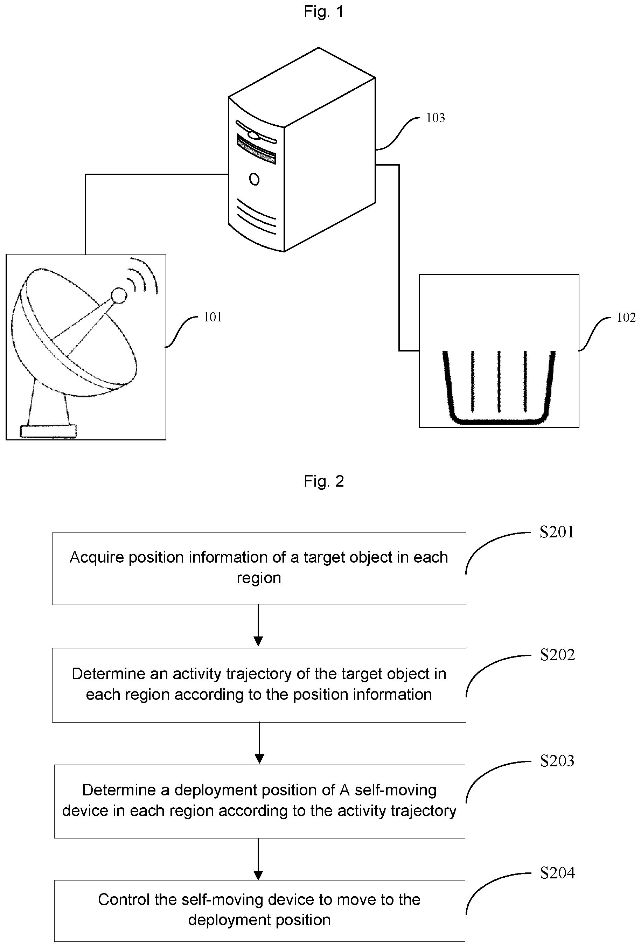

In order to facilitate understanding of the embodiments of the present disclosure, hereinafter, first, the architecture of a system for deploying a self-moving device involved in some embodiments of the present disclosure will be illustrated as an example with reference to the accompanying drawings:
Refer to Fig. 1, this figure is a schematic diagram of architecture of a system for deploying a self-moving device provided according to some embodiments of the present disclosure. As shown in Fig. 1, the system for deploying a self-moving device includes an electromagnetic wave device 101, a self-moving device 102 and an edge server 103.

The electromagnetic wave device 101 specifically refers to a device that provides information collection and information transmission services, and may be a microwave radar, an infrared sensor, or the like, which is not limited in the embodiments of the present disclosure.

The self-moving device 102 refers to a smart device that provides services for a user and can move, and may be a mobile waste container, a robot cleaner, or the like. In Fig. 1, the mobile waste container is only taken as an example.

The edge server 103 refers to a server corresponding to the electromagnetic wave device 101 and the self-moving device 102, and can provide backend services for the electromagnetic wave device and the self-moving device, including but not limited to: information processing services, instruction issuing services, etc.

It can be understood that the number of the electromagnetic wave device and the number of the self-moving device in Fig. 1 are merely exemplary. Any number of electromagnetic wave devices and self-moving devices may be included as actually needed.

On the basis of the system architecture shown in Fig. 1, in the embodiments of the present disclosure, the electromagnetic wave device 101 may collect position information of a target object, and send the position information to the edge server. After determining a deployment position of the self-moving device 102 according to the position information, the edge server 103 issues a movement instruction to the self-moving device 102, causing the self-moving device to move to the deployment position, thereby achieving the deployment of the self-moving device.

Hereinafter, a method for deploying a self-moving device provided in some embodiments of the present disclosure will be further explained and illustrated with reference to specific embodiments, and the embodiments do not constitute limitation on the embodiments of the present disclosure.

Refer to Fig. 2, this figure is a flowchart of embodiments of the method for deploying a self-moving device provided according to embodiments of the present disclosure. As shown in Fig. 2, the flow may include the following steps:
step 201, position information of a target object in each region is acquired.

Each region above specifically refers to at least one region, which may be living regions such as a bedroom or a kitchen of the target object, and may also be working regions such as an office or a laboratory, which is not limited in the embodiments of the present disclosure. When there is only one object in the region, the target object may be a unique object in the region; and when there are a plurality of objects in the region, the target object may be a pre-determined object to be detected, which is not limited in the embodiments of the present disclosure.

In practice, there may be a case in which the target object is not only in one region (for example, the target object is in a bedroom at 0:00 to 9:00, and the target object is in a living room at 9:00 to 12:00); thus, the position information of the target object collected by the electromagnetic wave device in one region may be blank; and in this case, the target object may be in another region. Therefore, one electromagnetic wave device may be placed in each region, such that the electromagnetic wave device can collect position information of the target object in the region to which the electromagnetic wave device belongs.

In some embodiments, the method may be applied to an edge server, such as the edge server 103 illustrated in Fig. 1. As can be determined from the system architecture shown in Fig. 1, the position information of the target object in each region may be periodically collected by the electromagnetic wave device 101, and uploaded to the edge server 103, such that the edge server 103 may receive the position information of the target object in each region collected by the electromagnetic wave device 101. In this way, the edge server may acquire the position information of the target object in each region.

Step 202, an activity trajectory of the target object in each region is determined according to the position information.

The position information refers to position information of the target object in each region. The activity trajectory is an activity trajectory of the target object corresponding to the position information in each region.

In some embodiments, in order to clearly represent the activity trajectory of the target object in each region, the activity trajectory is represented in the form of a thermodynamic diagram.

It should be noted that, the content above merely relates exemplary illustration of a specific form of the activity trajectory, and in practice, the activity trajectory may also be in other specific forms (for example, a line), which is not limited in the embodiments of the present disclosure. In addition, the number of the activity trajectories is also not limited in the embodiments of the present disclosure.

Step 203, a deployment position of the self-moving device in each region is determined according to the activity trajectory.

The deployment position refers to a position where the self-moving device is to be deployed in each region.

In practice, some obstacles that cannot be moved due to some reasons may exist in a region. Assuming that the region is a bedroom of the target object, then obstacles such as bed and cosmetic table may exist in the bedroom.

It can be determined from the illustration above that, in some embodiments, in order to avoid the effect of the self-moving device on daily activities of the target object in each region, and in order to save time, a deployment position satisfying preset conditions can be determined according to the activity trajectory of the target object in each region. The preset conditions may include: the deployment position being outside of the distribution range of obstacles and outside of the range of the activity trajectory, and being closest to the center of the activity trajectory. As such, the deployment position of the self-moving device in each region can be determined.

Step 204, the self-moving device is controlled to move to the deployment position.

It can be determined from the illustration above that, in some embodiments, the method may be applied to an edge server, such as the edge server 103 illustrated in Fig. 1. After determining the deployment position of the self-moving device in each region, the edge server 103 may issue a control instruction to the self-moving device, such that the self-moving device can move to the deployment position in response to the control instruction issued by the edge server 103. In this way, the self-moving device is controlled to move to the deployment position.

For example, it is assumed that the deployment position is the central position of a region, and the self-moving device is currently located at a southeast corner position of the region, then, as described above, the edge server 103 can issue a control instruction to the self-moving device, such that the self-moving device can move to the central position of the region in response to the control instruction issued by the edge server 103.

Furthermore, in some embodiments, the method for deploying a self-moving device may also be applied to self-moving devices, such as the self-moving device 102 shown in Fig. 1. The position information of the target object in each region is periodically collected by the electromagnetic wave device and sent to the self-moving device 102, such that after receiving the position information, the self-moving device 102 determines an activity trajectory of the target object in each region and a deployment position of the self-moving device 102 in each region, and then moves to the deployment position.

It should be noted that, the content above merely relates to exemplary illustration of an execution subject of the method for deploying a self-moving device, and in practice, the execution subject may also be other execution subjects (for example, a cloud server), which is not limited in the embodiments of the present disclosure.

So far, the related illustration of the flow in Fig. 2 has been completed.

It can be determined from the flow in Fig. 2 that, in the technical solutions of some embodiments of the present disclosure, position information of a target object in each region is acquired, an activity trajectory of the target object in each region is determined according to the position information, a deployment position of the self-moving device in each region is determined according to the activity trajectory, and the self-moving device is controlled to move to the deployment position. The position information of the target object in each region can be collected, and then the activity trajectory of the target object is determined, the deployment position of the self-moving device is determined according to the activity trajectory of the target object, and the self-moving device is controlled to move to the deployment position, without interfering with the daily activities of the target object. Compared with fixedly placing a self-moving device at a certain place, the target object does not need to move to the vicinity of the self-moving device, such that the self-moving device moves more intelligently, thereby improving the experience of the object.

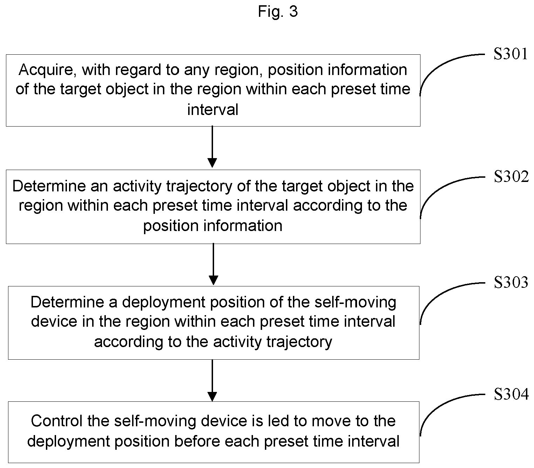

Refer to Fig. 3, this figure is another flowchart of embodiments of the method for deploying a self-moving device provided according to embodiments of the present disclosure. On the basis of the flow in Fig. 2, the flow in Fig. 3 may include the following steps:
Step 301, with regard to any region, position information of the target object in the region within each preset time interval is acquired.

It can be determined from the illustration of the flow in Fig. 2 that, in order to improve the accuracy, the electromagnetic wave device in each region can periodically collect the position information of the target object within a time period. In practice, there may be a case in which the target object is not only in one region in a time period (e.g. one day) (for example, the target object is in a bedroom at 0:00 to 9:00, and the target object is in a living room at 9:00 to 12:00); thus, the position information of the target object collected by the electromagnetic wave device in one region in a time period may be blank; and in this case, the target object may be in another region. Therefore, the position information of the target object in each region within a time period can be acquired.

In some embodiments, in order to allow the electromagnetic wave device in each region to be able to periodically collect the position information of the target object within a time period, the time period can be divided into a plurality of preset time intervals, such that the position information of the target object can be collected according to the preset time intervals. Hence, the preset time intervals include at least one preset time interval. Assuming that the time period is one day, then the preset time interval may be one hour.

On this basis, when there is at least one region, with regard to any region, position information of the target object in the region within each preset time interval can be acquired. In this way, the edge server may acquire the position information of the target object in each region within each preset time interval.

For example, it is assumed that there are two regions: a bedroom and a living room, and it is assumed that the time period is one day and each preset time interval is one hour, then, with regard to any one of the two regions, position information of the target object in the region within 24 preset time intervals is acquired, and the position information specifically includes position information in the bedroom and position information in the living room.

Step 302, according to the position information, an activity trajectory of the target object in the region within each preset time interval is determined.

It can be determined from the illustration above that, the position information is position information of the target object in each region within a time period. Correspondingly, according to the position information, the activity trajectory of the target object in each region within the time period can be determined. The activity trajectory is used for representing the activities of the target object in each region within each preset time interval, and may be a thermodynamic diagram, and may also be in a line or other representation forms, which is not limited in the embodiments of the present disclosure.

For example, it is assumed that there are two regions: a bedroom and a living room, and it is assumed that the time period is one day and each preset time interval is one hour, then, with regard to any one of the two regions, according to the position information of the target object in the region within 24 preset time intervals, the activity trajectories of the target object in the region within the 24 preset time intervals are determined, and specifically include: an activity trajectory in the bedroom and an activity trajectory in the living room.

Step 303, a deployment position of the self-moving device in the region within each preset time interval is determined according to the activity trajectory.

It can be determined from the illustration of step 203 that, in order to avoid the effect on daily activities of the target object in the region, and in order to save time, the deployment position is outside of the range of obstacles and of the activity trajectory in the region, and is closest to the center of the activity trajectory.

With regard to any region, after the activity trajectory of the target object in the region within each preset time interval is determined, a deployment position of the self-moving device in the region within each preset time interval is determined according to the activity trajectory.

For example, it is assumed that there are two regions: a bedroom and a living room, the time period is one day and each preset time interval is one hour, and it is assumed that the target object is in the bedroom at 0:00 to 12:00 and in the living room at 12:00 to 24:00, then, on the basis of the illustration above, according to the activity trajectories of the target object in the bedroom and the living room respectively within the 24 preset time intervals, the deployment positions of the target object in the bedroom and the living room within the 24 preset time intervals can be determined, and the deployment positions include: a first deployment position of the target object in the bedroom at 0:00 to 12:00, and a second deployment position of the target object in the living room at 12:00 to 24:00.

Step 304, before each preset time interval, the self-moving device is controlled to move to the deployment position.

For detailed illustration of step 304, reference may be made to the related illustration of step 204, which will not be repeated herein.

For example, it is assumed that there are two regions: a bedroom and a living room, the time period is one day and each preset time interval is one hour, and it is assumed that the target object is in the bedroom at 0:00 to 12:00 and in the living room at 12:00 to 24:00, then, on the basis of the illustration above, after the deployment positions (specifically the first deployment position of the target object in the bedroom at 0:00 to 12:00 and the second deployment position of the target object in the living room at 12:00 to 24:00) of the target object in the bedroom and the living room within the 24 preset time intervals are determined, the self-moving device is controlled to move to the first deployment position before 0:00 to 12:00, and the self-moving device is controlled to move to the second deployment position before 12:00 to 24:00.

By such a processing method, the self-moving device can be controlled to move to the deployment position before a preset time interval, thereby realizing intelligent deployment, saving the time for the target object to look for the self-moving device, and increasing the efficiency.

So far, the related illustration of the flow in Fig. 3 has been completed.

In the technical solutions of some embodiments of the present disclosure, with regard to any region, position information of the target object in the region within each preset time interval is acquired; and according to the position information, an activity trajectory of the target object in the region within each preset time interval is determined, a deployment position of the self-moving device in the region within each preset time interval is determined according to the activity trajectory, and then before each preset time interval, the self-moving device is controlled to move to the deployment position. Thus, the self-moving device can move to the deployment position in each region before each preset time interval, thereby preventing the target object from looking for the self-moving device in each region within each preset time interval, saving time, and improving the experience of the object.

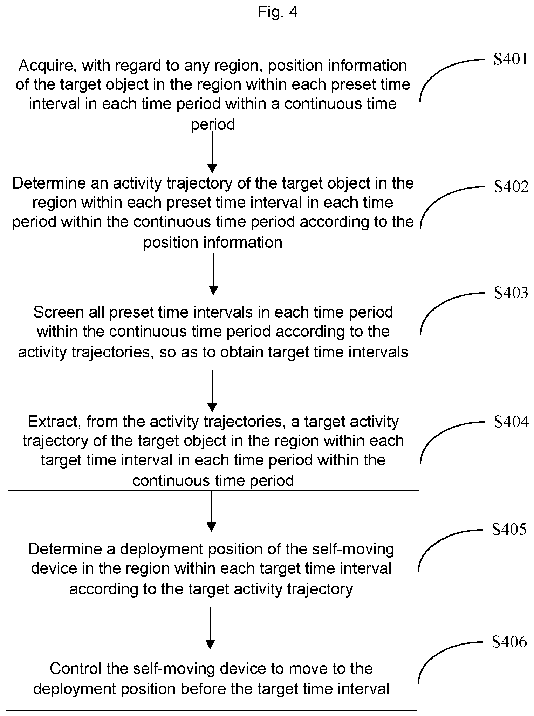

Refer to Fig. 4, this figure is still another flowchart of embodiments of the method for deploying a self-moving device provided according to embodiments of the present disclosure. On the basis of the flow in Fig. 3, the flow in Fig. 4 may include the following steps:
Step 401, with regard to any region, position information of the target object in the region within each preset time interval in each time period within a continuous time period is acquired.

In some embodiments, in order to improve the accuracy of the movement of the self-moving device in each region within each preset time interval, the position information of the target object in each region within the continuous time period can be acquired. The continuous time period may be one week or one month, which is not limited in the embodiments of the present disclosure.

It can be determined from the illustration of the flows in Figs. 2 and 3 that the position information of the target object in each region within each preset time interval in each time period within the continuous time period can be collected by the electromagnetic wave device in each region, and the collected position information is uploaded to the edge server. The edge server can acquire the position information of the target object in each region within each preset time interval in each time period within the continuous time period.

Step 402, an activity trajectory of the target object in the region within each preset time interval in each time period within the continuous time period is determined according to the position information.

It can be determined from the illustration above that, the position information is position information of the target object in each region within each preset time interval in each time period within the continuous time period. For example, it is assumed that the continuous time period is 7 days, each time period is one day, the preset time intervals are 24 preset time intervals, and the region is an office, then, the position information is position information of the target object in the office within 24 preset time intervals of each day in 7 days. Thus, with regard to any region, an activity trajectory of the target object in the region within each preset time interval in each time period within the continuous time period can be determined according to the position information.

It can be determined from the illustration of step 302 that, the activity trajectory is used for representing the activities of the target object in each region within each preset time interval, and may be a thermodynamic diagram, and may also be in a line or other representation forms, which are not limited in the embodiments of the present disclosure.

Step 403, all preset time intervals in each time period within the continuous time period are screened according to the activity trajectories, so as to obtain target time intervals.

Step 404, a target activity trajectory of the target object in the region within each target time interval in each time period within the continuous time period is extracted from the activity trajectories.

Step 405, a deployment position of the self-moving device in the region within each target time interval is determined according to the target activity trajectory.

Step 406, before the target time interval, the self-moving device is controlled to move to the deployment position.

Hereinafter, step 403 to step 406 will be described uniformly:
In practice, for any region, the target object may be not in the region within certain one or more preset time intervals. Therefore, in order to accurately deploy the self-moving device, the target time intervals during which the target object is present in the region can be determined, such that the self-moving device can move to a deployment position in the region before each target time interval.

Furthermore, for some reasons, the target object may appear in a certain region for a short time, such that the self-moving device cannot move to the deployment position of the region before the target time interval due to one unexpected situation. Therefore, in order to avoid the effect of unexpected situations, screening may be performed according to the activity trajectories of the target object in the region within all preset time intervals in the each time period within the continuous time period, and valid time intervals in all preset time intervals within the each time period within the continuous time period are determined as the target time intervals.

Correspondingly, the target activity trajectory of the target object in the region within each target time interval in each time period within the continuous time period is extracted from the activity trajectories of the target object in the region within all preset time intervals in the each time period within the continuous time period. In this way, the edge server can determine, according to the target activity trajectory, the deployment position of the self-moving device in the region within the target time interval, and further the edge server can control the self-moving device to move to the deployment position before the target time interval. Thus, the self-moving device can intelligently move according to the activity trajectory of the target object, thereby improving the experience of the object.

As to how to determine the deployment position and how to control the self-moving device to move to the deployment position, detailed illustration has been provided in the flows in Figs. 2 and 3, and thus will not be repeated here.

So far, the related illustration of the flow in Fig. 4 has been completed.

In the technical solutions of some embodiments of the present disclosure, with regard to any region, position information of the target object in the region within each preset time interval in each time period within a continuous time period is acquired, and an activity trajectory of the target object in the region within each preset time interval in each time period within the continuous time period is determined according to the position information. Then, all preset time intervals in each time period within the continuous time period are screened according to the activity trajectories, so as to obtain target time intervals. A target activity trajectory of the target object in the region within each target time interval in each time period within the continuous time period is extracted from the activity trajectories. A deployment position of the self-moving device in the region within each target time interval is determined according to the target activity trajectory, and then before the target time interval, the self-moving device is controlled to move to the deployment position. Thus, the activity trajectory can be determined according to the position information of the target object, and the self-moving device is deployed according to the activity trajectory, without requiring the target object to look for and move to the proximity of a fixed self-moving device, thereby increasing the efficiency and improving the experience of the object.

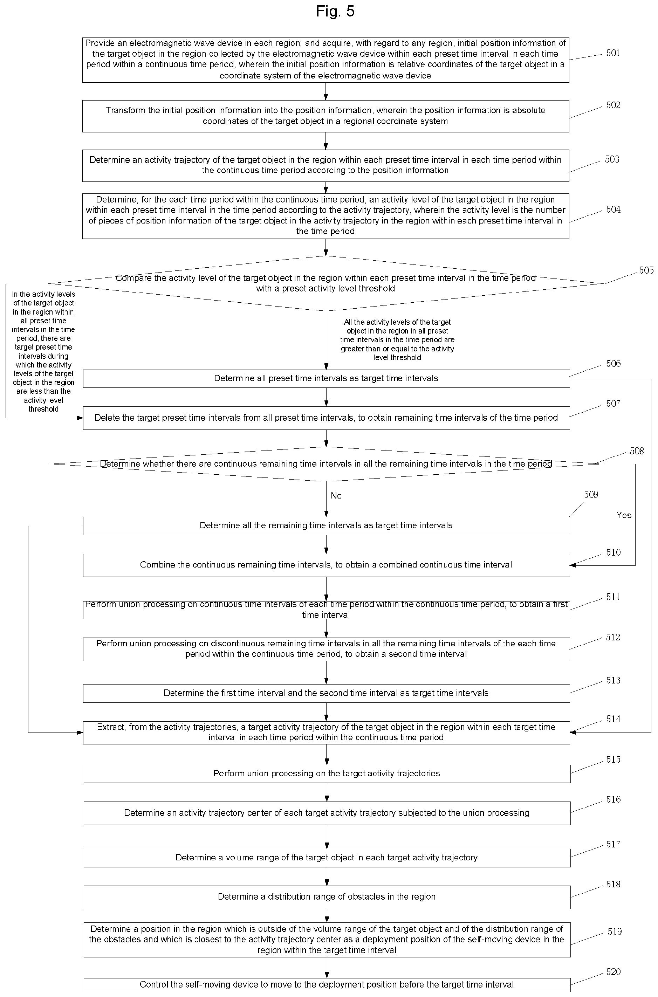

Refer to Fig. 5, this figure is yet another flowchart of embodiments of the method for deploying a self-moving device provided according to embodiments of the present disclosure. On the basis of the flow in Fig. 4, the flow in Fig. 5 may include the following steps:
Step 501, an electromagnetic wave device is provided in each region; and with regard to any region, initial position information of the target object in the region collected by the electromagnetic wave device within each preset time interval in each time period within a continuous time period is acquired, wherein the initial position information is relative coordinates of the target object in a coordinate system of the electromagnetic wave device.
Step 502, the initial position information is transformed into the position information, wherein the position information is absolute coordinates of the target object in a regional coordinate system.

Hereinafter, step 501 and step 502 will be described uniformly:
It can be determined from the illustration above that, in practice, there may be a case in which the target object is not only in one region, such that the position information of the target object collected by the electromagnetic wave device in one region may be blank; and in this case, the target object may be in another region. Therefore, the electromagnetic wave device can be provided in each region, such that the electromagnetic wave device can collect the position information of the target object in each region.

In some embodiments, in order to clearly represent the position information of the target object collected by the electromagnetic wave device, the position information may be coordinates. The electromagnetic wave device may be a microwave radar, and correspondingly, the initial position information may be relative coordinates of the target object in a coordinate system of the microwave radar, i.e. coordinates of the target object with respect to the microwave radar.

In the embodiments of the present disclosure, in order to facilitate the arrangement of the position information of the target object in each region, and eliminate the effect of initial position information under different electromagnetic wave coordinate systems which is collected by electromagnetic wave devices at different positions in different regions, and the effect of determining activity trajectories of the target object in the regions according to the initial position information, relative coordinates of the target object in the region under an electromagnetic wave coordinate system within each preset time interval in each time period within the continuous time period collected by the electromagnetic wave device with regard to any region can be transformed into absolute coordinates in a regional coordinate system, that is, the initial position information is transformed into the position information. In this way, the position information of the target object in each region within each preset time interval in each time period of the continuous time period in the same regional coordinate system can be obtained.

The regional coordinate system may be a coordinate system established by taking a point in any region as a center, and may also be a coordinate system established by taking a point in a target environment to which all regions belong as a center, which is not limited in the embodiments of the present disclosure. The absolute coordinates are coordinate values of the target object in the regional coordinate system. Furthermore, the regional coordinate system may be a space coordinate system or a plane coordinate system, which is not limited in the embodiments of the present disclosure.

For example, it is assumed that the regions are bedroom, living room and kitchen respectively. Then, the regional coordinate system may be established by taking a northeast corner of a floor plan of the bedroom as a center.

It is further assumed that the regions are bedroom, living room and kitchen respectively. Then, the regional coordinate system may be established by taking a northwest corner in a house floor plan of a house corresponding to the regions as a center.

For example, assuming that the initial position information of the target object in the bedroom collected by the electromagnetic wave device is (-1, -1), and assuming that the floor plan of the bedroom is a rectangular floor plan with a length of 3 and a width of 2, the electromagnetic wave coordinate is a plane coordinate system established by taking the southwest corner of the bedroom as a center, and the regional coordinate system is a plane coordinate system established by taking the northeast corner of the bedroom as a center, then, according to the illustration above, the initial position information is transformed into the position information, that is, the relative coordinates (-1, -1) are transformed into absolute coordinates (2, 1) in an active coordinate system.

In some embodiments, the electromagnetic wave coordinate system corresponding to the electromagnetic wave device and the orientation of the electromagnetic wave device can be determined, an included angle between the electromagnetic wave coordinate system and the regional coordinate system is calculated according to the orientation, and the included angle and the initial position information are substituted into a preset coordinate transformation calculation formula to obtain the position information.

Step 503, an activity trajectory of the target object in the region within each preset time interval in each time period within the continuous time period is determined according to the position information.

For detailed illustration of step 503, reference may be made to the related illustration of step 402 in the flow in Fig, 4, which will not be repeated herein.

Step 504, for the each time period within the continuous time period, an activity level of the target object in the region within each preset time interval in the time period is determined according to the activity trajectory, wherein the activity level is the number of pieces of position information of the target object in the activity trajectory in the region within each preset time interval in the time period.

Step 505, the activity level of the target object in the region within each preset time interval in the time period is compared with a preset activity level threshold; if all the activity levels of the target object in the region in all preset time intervals in the time period are greater than or equal to the activity level threshold, step 506 is executed; and if in the activity levels of the target object in the region within all preset time intervals in the time period, there are target preset time intervals during which the activity levels of the target object in the region are less than the activity level threshold, step 507 is executed.

Step 506, all preset time intervals are determined as target time intervals.

Step 507, the target preset time intervals are deleted from all preset time intervals, to obtain remaining time intervals of the time period.

Hereinafter, step 504 to step 507 will be described uniformly:
It can be determined from the illustration in the flow shown in Fig. 4 that for some reasons, the target object may appear in a certain region for a short time, and in order to avoid short-term turning in the activity trajectory of the target object due to short-term appearance of the target object in the region, such that the deployment position of the self-moving device is not accurate enough, the activity trajectories of the target object can be screened.

Specifically, in the embodiments of the present disclosure, for any region and for the each time period within the continuous time period, the activity level of the target object in the region within each preset time interval in the time period can be determined according to the activity trajectory of the target object in the region within each preset time interval in the time period. The activity levels of the target object in the region within all preset time intervals in the time period are compared with the preset activity level threshold (e.g. 100), so as to screen activity trajectories of the target object, thereby determining target time intervals.

The activity level is the number of pieces of position information of the target object in the activity trajectory in the region within each preset time interval in the time period, i.e. the number of times of appearance of the target object in the region as periodically collected by the electromagnetic device.

For example, the electromagnetic wave device collects the position information of the target object in the region once every one minute, and it is assumed that the target object stays in the region for one hour, then, according to the illustration above, it can be determined that the number of pieces of position information of the target object in the activity trajectory in the region within one preset time interval is 60, that is, the activity level is 60.

If all the activity levels of the target object in the region within all preset time intervals in the time period are greater than or equal to the activity level threshold, it indicates that all activity trajectories of the target object in the region within all preset time intervals in the time period belong to valid activity trajectories, and there is no activity trajectory occurring in the region in a short time; therefore, all preset time intervals can be determined as target time intervals.

If in the activity levels of the target object in the region within all preset time intervals in the time period, there are target preset time intervals during which the activity levels of the target object in the region are less than the activity level threshold, it indicates that in the activity trajectories of the target object in the region within all preset time intervals in the time period, there are activity trajectories occurring in the region in a short time. On this basis, the target preset time intervals may be deleted from all preset time intervals, to obtain remaining time intervals.

For example, it is assumed that the target object goes to a bedroom for fetching something at 10:00 am, and in this case, it is determined that the activity level of the target object in the bedroom at 10:00 am is 2, and the activity level threshold is 30, then, it can be determined that the activity level of the target object in the bedroom may be less than the activity level threshold, and then 10:00 am is deleted from all preset time intervals.

In addition, assuming that the activity trajectories are represented in the form of a thermodynamic diagram, all preset time intervals of which the activity levels are greater than or equal to the activity level threshold, and target preset time intervals of which the activity levels are less than the activity level threshold can be quickly determined according to the thermodynamic diagram, and then the target time intervals are determined, such that the self-moving device can move to a deployment position within a corresponding region before each target time interval.

By such processing, valid activity trajectories and corresponding target time intervals can be screened out according to the activity trajectories.

Step 508, whether there are continuous remaining time intervals in all the remaining time intervals in the time period is determined; if there are no continuous remaining time interval, step 509 is executed; and if there are continuous remaining time intervals, step 510 is executed.

Step 509, all the remaining time intervals are determined as target time intervals.

Step 510, the continuous remaining time intervals are combined, to obtain a combined continuous time interval.

Step 511, union processing is performed on continuous time intervals of each time period within the continuous time period, to obtain a first time interval.

Step 512, union processing is performed on discontinuous remaining time intervals in all the remaining time intervals of the each time period within the continuous time period, to obtain a second time interval.

Step 513, the first time interval and the second time interval are determined as target time intervals.

Hereinafter, step 508 to step 513 will be described uniformly:
It can be determined from the illustration above that, when it is determined that in the activity levels of the target object in the region within all preset time intervals in the time period, there are target preset time intervals during which the activity levels of the target object in the region are less than the activity level threshold, the target preset time intervals may be deleted from all preset time intervals to obtain remaining time intervals.

In the embodiments of the present disclosure, each time period is divided into a plurality of preset time intervals, and thus in the activity trajectories of the target object in the region in all the remaining time intervals in the time period, there may be activity trajectories within continuous remaining time intervals; therefore, for convenience of statistics, continuous preset time intervals may be combined.

On the basis of the illustration above, after the target preset time intervals are deleted from all preset time intervals to obtain the remaining time intervals, it can be determined whether there are continuous remaining time intervals in all the remaining time intervals in the time period, so as to determine the target time intervals.

If there is no continuous remaining time interval in all the remaining time intervals in the time period, all the remaining time intervals may be determined as the target time intervals.

If there are continuous remaining time intervals in all the remaining time intervals in the time period, the continuous remaining time intervals are combined, to obtain a combined continuous time interval.

For example, it is assumed that at 7:00 am to 8:00 am and at 8:00 am to 9:00 am, the activity levels of the target object in the region in the two remaining time intervals are greater than or equal to the activity level threshold, then the two remaining time intervals may be combined to obtain a continuous time interval, i.e. 7:00 am to 9:00 am.

Next, union processing can be performed on continuous time intervals of each time period within the continuous time period, to obtain a first time interval; union processing is performed on discontinuous remaining time intervals in all the remaining time intervals of the each time period within the continuous time period, to obtain a second time interval; and finally, the first time interval and the second time interval are determined as target time intervals. In this way, valid time intervals, i.e. target time intervals, of the target object in each region within all preset time intervals in each time period of the continuous time period can be obtained.

For example, it is assumed that the continuous time period is 7 days, and the remaining time intervals of the target object in a first region within each of the continuous 7 days are 7:00 to 9:00, 7:00 to 9:00 and 11:00 to 12:00, 7:00 to 10:00 and 11:00 to 13:00, 7:00 to 10:00, 7:00 to 10:00, 8:00 to 10:00, and 11:00 to 13:00, respectively, then, according to the illustration above, the remaining time intervals may be subjected to union processing, to obtain target time intervals: 7:00 to 10:00 and 11:00 to 13:00.

Step 514, a target activity trajectory of the target object in the region within each target time interval in each time period within the continuous time period is extracted from the activity trajectories.

For detailed illustration of step 514, reference may be made to the related illustration of step 404 in the flow in Fig, 4, which will not be repeated herein.

Step 515, union processing is performed on the target activity trajectories.

Step 516, an activity trajectory center of each target activity trajectory subjected to the union processing is determined.

Step 517, a volume range of the target object in each target activity trajectory is determined.

Step 518, a distribution range of obstacles in the region is determined.

Step 519, a position in the region which is outside of the volume range of the target object and of the distribution range of the obstacles and which is closest to the activity trajectory center is determined as a deployment position of the self-moving device in the region within the target time interval.

Step 520, before the target time interval, the self-moving device is controlled to move to the deployment position.

Hereinafter, step 515 to step 520 will be described uniformly:
It can be determined from the illustration above that, after target activity trajectories of the target object in all regions within target time intervals in each time period within the continuous time period are extracted from the activity trajectories of the target object in all regions within all preset time intervals in the each time period within the continuous time period, the target activity trajectories of the target object in all regions within each time period within the continuous time period can be subjected to union processing.

For example, it is assumed that a target activity trajectory of the target object in a first region in each time period of the continuous time period is trajectory A, and a target activity trajectory of the target object in a first region in each time period of the continuous time period is trajectory B, then, according to the illustration above, the target activity trajectories are subjected to the union processing, and the obtained target activity trajectories subjected to the union processing can be {trajectory A, trajectory B}.

Further, since the target object has a certain volume, the target object may occupy a part of volume range in the region. Furthermore, in each region, obstacles may exist, and the obstacles may also occupy a part of distribution range in the region to which the obstacles belong. Therefore, an activity trajectory center of each target activity trajectory subjected to the union processing, the volume range of the target object in the activity trajectory, and the distribution range of the obstacles in each region can be determined.

In some embodiments, in order to avoid the effect of the self-moving device on daily activities of the target object in each region, and in order to save time, a position in the region which is outside of the volume range of the target object and of the distribution range of the obstacles and which is closest to the activity trajectory center is determined as a deployment position of the self-moving device in the region within the target time interval. In this way, before the target time interval, the self-moving device can be controlled to move to the deployment position, thereby improving the experience.

For example, it is assumed that the regions include a first region and a second region, and the target time interval corresponding to the first region is 8:00 to 10:00 and the target time interval corresponding to the second region is 13:00 to 15:00, and it is assumed that a deployment position in the first region is position a and a deployment position in the second region is position b, then, according to the illustration above, the self-moving device may be controlled to move to the position a in the first region before 8:00 to 10:00, and the self-moving device may be controlled to move to the position b in the first region before 13:00 to 15:00.

In addition, if there are a plurality of self-moving devices in each region, then before the target time, a self-moving device closest to a target deployment position in a target region may be selected, and the self-moving device is moved to the deployment position in the target region.

If there is one self-moving device, and within the same target time interval, the activity levels of the target object in a plurality of regions are all greater than or equal to the activity level threshold, then a region with the highest activity level is selected as a target region, and a deployment position within the target region is further determined; and before the target time interval, the self-moving device is controlled to move to the deployment position.

On the basis of the illustration above, if there are a plurality of self-moving devices, and within the same target time interval, the activity levels of the target object in a plurality of regions are all greater than or equal to the activity level threshold, then several regions with higher activity levels are selected as target regions, and deployment positions within the several regions with higher activity levels are further determined; and before the target time interval, a self-moving device having the closest distance to a deployment position is controlled to move to the deployment position.

It should be noted that, the content above merely relates exemplary illustration of a specific form for deploying the self-moving device, and in practice, the deployment of the self-moving device may also be other specific forms, which is not limited in the embodiments of the present disclosure. In addition, the number of regions, and the type and number of the self-moving devices are not limited in the embodiments of the present disclosure.

By the processing method, the self-moving device can be intelligently deployed according to the activity trajectory of the target object in each region within each preset time interval, thereby increasing the efficiency and improving the experience.

Corresponding to the described embodiments of the method for deploying a self-moving device, some embodiments of the present disclosure further provide a block diagram of embodiments of an apparatus.

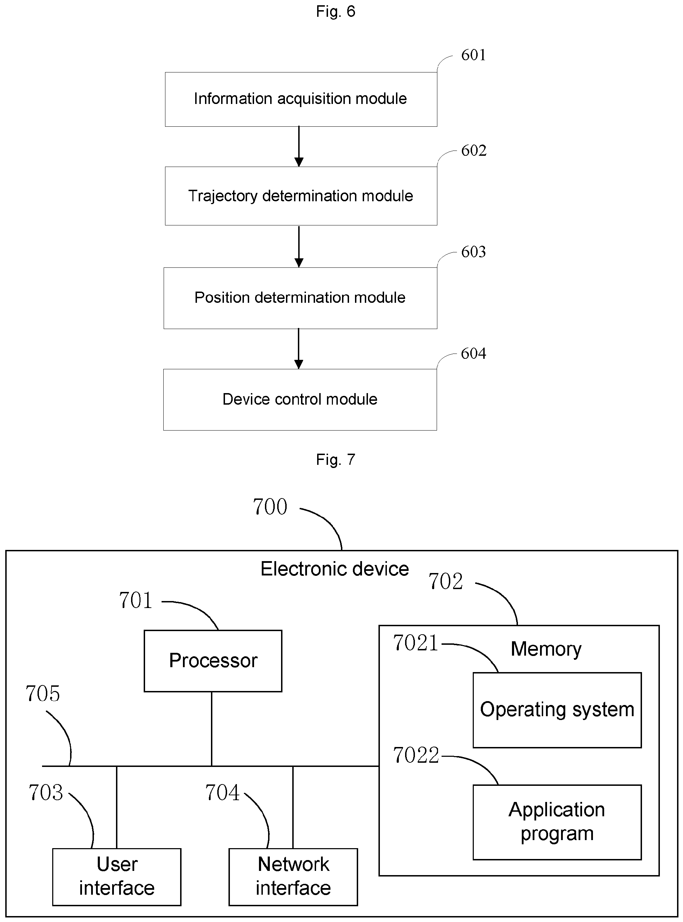

Refer to Fig. 6, this figure is a block diagram of embodiments of an apparatus for deploying a self-moving device provided according to embodiments of the present disclosure. As shown in Fig. 6, the apparatus includes:
an information acquisition module 601, configured to acquire position information of a target object in each region;
a trajectory determination module 602, configured to determine an activity trajectory of the target object in each region according to the position information;
a position determination module 603, configured to determine a deployment position of the self-moving device in each region according to the activity trajectory; and
a device control module 604, configured to control the self-moving device to move to the deployment position.

In some embodiments, the information acquisition module 601 includes (not shown in the figures):
an information acquisition sub-module, configured to acquire, with regard to any region, position information of the target object in the region within each preset time interval;
the trajectory determination module 602 includes (not shown in the figures):
   a trajectory determination sub-module, configured to determine an activity trajectory of the target object in the region within each preset time interval according to the position information;
   the position determination module 603 includes (not shown in the figures):
      a position determination sub-module, configured to determine a deployment position of the self-moving device in the region within each preset time interval according to the activity trajectory; and
      the device control module 604 includes (not shown in the figures):
         a device control sub-module, configured to control the self-moving device to move to the deployment position before each preset time interval.

In some embodiments, the information acquisition sub-module includes (not shown in the figures):
an information acquisition unit, configured to acquire, with regard to any region, position information of the target object in the region within each preset time interval in each time period within a continuous time period;
the trajectory determination sub-module includes (not shown in the figures):
   a trajectory determination unit, configured to determine an activity trajectory of the target object in the region within each preset time interval in each time period within the continuous time period according to the position information;
   the position determination sub-module includes (not shown in the figures):
      a target time interval determination unit, configured to screen from all preset time intervals in each time period within the continuous time period according to the activity trajectories, so as to obtain target time intervals;
      a target activity trajectory determination unit, configured to extract, from the activity trajectories, a target activity trajectory of the target object in the region within each target time interval in each time period within the continuous time period; and
      a position determination unit, configured to determine a deployment position of the self-moving device in the region within each target time interval according to the target activity trajectory; and
      the device control sub-module includes (not shown in the figures):
         a device control unit, configured to control the self-moving device to move to the deployment position before the target time interval.

In some embodiments, an electromagnetic wave device is provided in each region; and the information acquisition unit is specifically configured to:
acquire, with regard to any region, initial position information of the target object in the region collected by the electromagnetic wave device within each preset time interval in each time period within a continuous time period, wherein the initial position information is relative coordinates of the target object in a coordinate system of the electromagnetic wave device; and
transform the initial position information into the position information, wherein the position information is absolute coordinates of the target object in a regional coordinate system.

In some embodiments, the target time interval determination unit is specifically configured to:
determine, for the each time period within the continuous time period, an activity level of the target object in the region within each preset time interval in the time period according to the activity trajectory, wherein the activity level is the number of pieces of position information of the target object in the activity trajectory in the region within each preset time interval in the time period;
compare the activity level of the target object in the region within each preset time interval in the time period with a preset activity level threshold; and
determine all preset time intervals as the target time intervals if all the activity levels of the target object in the region within all preset time intervals in the time period are greater than or equal to the activity level threshold.

In some embodiments, the target time interval determination unit is further configured to:
if in the activity levels of the target object in the region within all preset time intervals in the time period, there are target preset time intervals during which the activity levels of the target object in the region are less than the activity level threshold, delete the target preset time intervals from all preset time intervals, to obtain remaining time intervals of the time period;
determine whether there are continuous remaining time intervals in all the remaining time intervals in the time period; and
determine all the remaining time intervals as the target time intervals if there is no continuous remaining time interval in all the remaining time intervals in the time period.

In some embodiments, the target time interval determination unit is further configured to:
combine the continuous remaining time intervals to obtain a combined continuous time interval if there are continuous remaining time intervals in all the remaining time intervals in the time period;
perform union processing on the continuous time intervals of each time period within the continuous time period, to obtain a first time interval;
perform union processing on discontinuous remaining time intervals in all the remaining time intervals of the each time period within the continuous time period, to obtain a second time interval; and
determine the first time interval and the second time interval as target time intervals.

In some embodiments, the position determination unit is specifically configured to
perform union processing on the target activity trajectories;
determine an activity trajectory center of each target activity trajectory subjected to the union processing;
determine a volume range of the target object in each target activity trajectory;
determine a distribution range of obstacles in the region; and
determine a position in the region which is outside of the volume range of the target object and of the distribution range of the obstacles and which is closest to the activity trajectory center as a deployment position of the self-moving device in the region within the target time interval.

Fig. 7 is a schematic structural diagram of an electronic device provided according to embodiments of the present disclosure. The electronic device 700 shown in Fig. 7 includes: at least one processor 701, a memory 702, at least one network interface 704, and a user interface 703. Various components in the electronic device 700 are coupled together VIA a bus system 705. It will be appreciated that the bus system 705 is used to implement connection communications between these components. In addition to a data bus, the bus system 705 further includes a power bus, a control bus, and a status signal bus. However, for purpose of clarity, in Fig. 7, various buses are labeled as the bus system 705.

The user interface 703 may include a display, a keyboard or a pointing device (e.g. a mouse, a trackball), a touchpad or a touch screen, etc.

It can be understood that the memory 702 in the embodiments of the present disclosure may be a transitory memory or a non-transitory memory, or may include both transitory and non-transitory memories. The non-transitory memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The transitory memory may be a random access memory (RAM), which is used as an external cache. By way of illustration rather than limitation, many forms of RAMs are available, such as static random access memory (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDRSDRAM), enhanced synchronous dynamic random access memory (Enhanced SDRAM, ESDRAM), synchronous link dynamic random access memory (Synchlink DRAM, SLDRAM) and direct memory bus random access memory (Direct Rambus RAM, DRRAM). The memory 702 described herein is intended to include, but is not limited to, these and any other suitable type of memories.

In some embodiments, the memory 702 stores the following elements, executable units or data structures, or subsets thereof, or extended sets thereof: an operating system 7021 and an application program 7022.

The operating system 7021 includes various system programs, such as a framework layer, a core library layer, and a driver layer, and is used to implement various basic services and process hardware-based tasks. The application program 7022 includes various application programs, such as a media player and a browser, and is used to implement various application services. A program for implementing the method in the embodiments of the present disclosure may be included in the application program 7022.

In the embodiments of the present disclosure, by invoking a program or instructions stored in the memory 702, which may specifically be a program or instructions stored in the application program 7022, the processor 701 is used to execute the method steps provided in the method embodiments, for example, including:
position information of a target object in each region is acquired;
an activity trajectory of the target object in each region is determined according to the position information;
a deployment position of a self-moving device in each region is determined according to the activity trajectory; and
the self-moving device is controlled to move to the deployment position.

The method disclosed in the embodiments of the present disclosure may be applied to the processor 701 or implemented by the processor 701. The processor 701 may be an integrated circuit chip having signal processing capability. In an implementation process, the steps of the method may be completed by an integrated logic circuit of hardware in the processor 701 or instructions in the form of software. The processor 701 may be a general processor, a Digital Signal Processor (DSP), an Application Specific Integrated Circuit (ASIC), a Field Programmable Gate Array (FPGA), or other programmable logic devices, a discrete gate or transistor logic device, or a discrete hardware component. The method, steps, and logical block diagrams disclosed in the embodiments of the present disclosure may be implemented or performed. The general-purpose processor may be a microprocessor, or the processor may also be any conventional processor, etc. Steps of the method disclosed in the embodiments of the present disclosure may be directly embodied as being completed by a hardware decoding processor, or being completed by execution by a combination of hardware and software units in the decoding processor. The software unit may be located in a mature storage medium in the art, such as a random access memory, a flash memory, a read-onlymemory, a programmable read-only memory, or an electrically erasable programmable memory, and a register. The storage medium is located in the memory 702, and the processor 701 reads information in the memory 702 and completes the steps of the method in combination with hardware of the processor.

It can be appreciated that these embodiments described herein may be implemented in hardware, software, firmware, middleware, microcode, or combinations thereof. For hardware implementation, a processing unit may be implemented in one or more Application Specific Integrated Circuits (ASICs), a Digital Signal Processing (DSP), a digital signal processing device (DSP Device, DSPD), a Programmable Logic Device (PLD), a Field-Programmable Gate Array (FPGA), a general-purpose processor, a controller, a microcontroller, a microprocessor, other electronic units for executing the functions described in some embodiments of the present disclosure, or combinations thereof.

For software implementation, the techniques described herein may be implemented by units executing the functions described herein. The software codes may be stored in the memory and executed by the processor. The memory may be implemented in the processor or external to the processor.

The electronic device provided in this embodiment may be the electronic device as shown in Fig. 7, and may execute all steps of the method for deploying a self-moving device as shown in Figs. 2-5, so as to implement the technical effects of the method for deploying a self-moving device as shown in Figs. 2-5. For details, reference may be made to the relevant illustration regarding Figs. 2-5; and in order to make the illustration concise, they will not be repeated herein.

Embodiments of the present disclosure further provide a storage medium (a computer-readable storage medium). The storage medium herein stores one or more programs. The storage medium may include a transitory memory, such as a random access memory; the memory may also include a non-transitory memory, such as a read-only memory, a flash memory, a hard disk, or a solid state drive; and the memory may also include a combination of memories of the described types.

When one or more programs in the storage medium may be executed by one or more processors, the described method for deploying a self-moving device which is executed on the electronic device side is implemented.

The processor is used to execute a program which is stored in the memory and is used for deploying a self-moving device, so as to implement the following steps of the method for deploying a self-moving device which is executed on the electronic device side:
position information of a target object in each region is acquired;
an activity trajectory of the target object in each region is determined according to the position information;
a deployment position of the self-moving device in each region is determined according to the activity trajectory; and
the self-moving device is controlled to move to the deployment position.

A person skilled in the art may further appreciate that units and algorithm steps in examples described in combination with the embodiments disclosed herein can be implemented in the form of electronic hardware, computer software, or a combination of the two. To clearly describe the interchangeability between the hardware and the software, the illustration above has generally described compositions and steps of each example according to functions. Whether these functions are executed by hardware or software depends on specific applications and design constraint conditions of the technical solutions. A person skilled in the art could use different methods to implement the described functions for each particular application, but the implementation shall not be considered to go beyond the scope of some embodiments of the present disclosure.

The steps of the method or algorithm described in conjunction with the embodiments disclosed herein may also be implemented by hardware, by a software module executed by a processor, or by a combination thereof. The software module may be placed in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The objects, technical solutions, and beneficial effects of the present disclosure have been further described in detail by the specific embodiments. It should be understood that the content above merely relates to specific embodiments of the present disclosure, and is not intended to limit the scope of protection of the present disclosure. Any modifications, equivalent replacements, improvements and the like made within the spirit and principle of the present disclosure shall all fall within the scope of protection of the present disclosure.

## Claims

1. A method for deploying a self-moving device, the method comprising:
acquiring position information of a target object in each region;
determining an activity trajectory of the target object in each region according to the position information;
determining a deployment position of the self-moving device in each region according to the activity trajectory; and
controlling the self-moving device to move to the deployment position.

2. The method according to claim 1, wherein acquiring the position information of the target object in each region, comprises:
acquiring, with regard to any region, position information of the target object in the region within each preset time interval;
determining the activity trajectory of the target object in each region according to the position information, comprises:
determining the activity trajectory of the target object in the region within the each preset time interval according to the position information;
determining the deployment position of the self-moving device in the each region according to the activity trajectory, comprises:
determining the deployment position of the self-moving device in the region within the each preset time interval according to the activity trajectory; and
controlling the self-moving device to move to the deployment position, comprises:
controlling the self-moving device to move to the deployment position before the each preset time interval.

3. The method according to claim 2, wherein
acquiring, with regard to the any region, the position information of the target object in the region within the each preset time interval, comprises:
acquiring, with regard to the any region, the position information of the target object in the region within the each preset time interval in each time period within a continuous time period;
determining the activity trajectory of the target object in the region within the each preset time interval according to the position information, comprises:
determining the activity trajectory of the target object in the region within the each preset time interval in the each time period within the continuous time period according to the position information;
determining the deployment position of the self-moving device in the region within the each preset time interval according to the activity trajectory, comprises:
screening from all preset time intervals in the each time period within the continuous time period according to the activity trajectories, so as to obtain target time intervals;
extracting, from the activity trajectories, a target activity trajectory of the target object in the region within each target time interval in the each time period within the continuous time period; and
determining a deployment position of the self-moving device in the region within the each target time interval according to target activity trajectories; and
controlling the self-moving device to move to the deployment position before the each preset time interval, comprises:
controlling the self-moving device to move to the deployment position before the target time interval.

4. The method according to claim 3, wherein an electromagnetic wave device is provided in each region; and acquiring, with regard to any region, position information of the target object in the region within the each preset time interval in the each time period within the continuous time period, comprises:
acquiring, with regard to any region, initial position information of the target object in the region collected by the electromagnetic wave device within the each preset time interval in the each time period within the continuous time period, wherein the initial position information is relative coordinates of the target object in a coordinate system of the electromagnetic wave device; and
transforming the initial position information into the position information, wherein the position information is absolute coordinates of the target object in a regional coordinate system.

5. The method according to claim 3, wherein screening from the all preset time intervals in the each time period within the continuous time period according to the activity trajectories, so as to obtain the target time intervals, comprises:
determining, for the each time period within the continuous time period, an activity level of the target object in the region within the each preset time interval in the time period according to the activity trajectory, wherein the activity level is the number of pieces of position information of the target object in the activity trajectory in the region within the each preset time interval in the time period;
comparing the activity level of the target object in the region within the each preset time interval in the time period with a preset activity level threshold; and
determining the all preset time intervals as the target time intervals in a case that all the activity levels of the target object in the region within the all preset time intervals in the time period are greater than or equal to the activity level threshold.

6. The method according to claim 5, wherein screening from the all preset time intervals in the each time period within the continuous time period according to the activity trajectories, so as to obtain the target time intervals, further comprises:
in a case that in the activity levels of the target object in the region within the all preset time intervals in the time period, there are target preset time intervals during which the activity levels of the target object in the region are less than the activity level threshold, deleting the target preset time intervals from the all preset time intervals, to obtain remaining time intervals of the time period;
determining whether there are continuous remaining time intervals in all the remaining time intervals in the time period; and
determining all the remaining time intervals as the target time intervals in a case that there is no continuous remaining time interval in all the remaining time intervals in the time period.

7. The method according to claim 6, wherein screening from the all preset time intervals in the each time period within the continuous time period according to the activity trajectories, so as to obtain the target time intervals, further comprises:
combining the continuous remaining time intervals to obtain a combined continuous time interval in a case that there are the continuous remaining time intervals in all the remaining time intervals in the time period;
performing union processing on the continuous time intervals of the each time period within the continuous time period, to obtain a first time interval;
performing union processing on discontinuous remaining time intervals in all the remaining time intervals of the each time period within the continuous time period, to obtain a second time interval; and
determining the first time interval and the second time interval as the target time intervals.

8. The method according to claim 3, wherein determining the deployment position of the self-moving device in the region within the each target time interval according to the target activity trajectories, comprises:
performing union processing on the target activity trajectories;
determining an activity trajectory center of the target activity trajectories subjected to the union processing;
determining a volume range of the target object in each the target activity trajectory;
determining a distribution range of obstacles in the region; and
determining a position in the region which is outside of the volume range of the target object and of the distribution range of the obstacles and which is closest to the activity trajectory center as a deployment position of the self-moving device in the region within the target time interval.

9. An apparatus for deploying a self-moving device, the apparatus comprising:
an information acquisition module, configured to acquire position information of a target object in each region;
a trajectory determination module, configured to determine an activity trajectory of the target object in each region according to the position information;
a position determination module, configured to determine a deployment position of the self-moving device in each region according to the activity trajectory; and
a device control module, configured to: control the self-moving device to move to the deployment position.

10. An electronic device, comprising: a processor and a memory, wherein the processor is used for executing a program for deploying a self-moving device stored in the memory, so as to implement the method for deploying a self-moving device according to any one of claims 1-8.

11. A storage medium, wherein the storage medium stores one or more programs, and the one or more programs may be executed by one or more processors, so as to implement the method for deploying a self-moving device according to any one of claims 1 to 8.
